# FASCICULE DE BREVET EUROPEEN

(11) **EP 1 434 476 B1**
(45) Date de publication et mention de la délivrance du brevet: **13.02.2008**
(21) Numéro de dépôt: 02800165.9
(22) Date de dépôt: 01.10.2002
(51) Int. Cl.: A01D 34/66

(54) **MACHINE AGRICOLE, NOTAMMENT DU TYPE FAUCHEUSE ROTATIVE, COMPORTANT UN DISPOSITIF DE COUPE AMELIOREE**
LANDMASCHINE, INSBESONDERE KREISELMÄHER, MIT VERBESSERTER SCHNEIDVORRICHTUNG
AGRICULTURAL MACHINE, PARTICULARLY OF THE ROTARY MOWER TYPE, COMPRISING AN IMPROVED CUTTING DEVICE

(30) Priorité: 03.10.2001 FR 0112699
(43) Date de publication de la demande: 07.07.2004
(73) Titulaire: KUHN S.A., 67706 Saverne Cedex (FR)
(72) Inventeur: NEUERBURG, Horst, F-67700 Saverne (FR)
(86) Numéro de dépôt international: PCT/FR2002/003334
(87) Numéro de publication internationale: WO 2003/028436

(56) Documents cités:
- EP-A- 1 002 458
- DE-A- 2 524 348
- DE-A- 19 927 966
- FR-A- 2 548 862
- US-A- 4 304 088
- US-A- 4 686 818
- US-A- 4 693 062

## Description

La présente invention se rapporte au domaine technique général du machinisme agricole et en particulier au domaine des machines du type faucheuse ou faucheuse-conditionneuse.

Plus précisément, la présente invention concerne une machine agricole munie d'un dispositif de coupe, ledit dispositif de coupe comportant :
- un carter,
- au moins trois organes de coupe disposés au-dessus dudit carter et liés audit carter de manière pivotante autour d'un axe respectif dirigé vers le haut, ces organes de coupe comportant des éléments de coupe décrivant, lors du travail, des cercles autour de l'axe de rotation de l'organe de coupe respectif, lesdits cercles ayant tous les mêmes diamètres,
- des éléments de transmission entraînant en rotation lesdits organes de coupe autour desdits axes respectifs, et
- parmi lesdits organes de coupe, au moins deux organes de coupe adjacents ayant des sens de rotation opposés et convergents vers l'avant.

Une telle machine agricole est connue dans l'état de la technique, notamment par le document EP 1 002 458 A1. En effet, ce document décrit une faucheuse à disques comportant un dispositif de coupe et un châssis. Ledit châssis permet de lier ledit dispositif de coupe à un tracteur agricole. Pour sa part, ledit dispositif de coupe comporte un carter et des organes de coupe. Lesdits organes de coupe sont disposés à intervalles réguliers au-dessus dudit carter. De plus, lesdits organes de coupe sont liés de manière pivotante audit carter au moyen d'une articulation respective dont l'axe est dirigé vers le haut. Lors du travail, lesdits organes de coupe sont entraînés en rotation par des éléments de transmission afin de couper un produit sur pied, par exemple de l'herbe.

Pour ce faire chaque organe de coupe comporte, dans ce document antérieur, un support en forme de disque et deux éléments de coupe. Lesdits éléments de coupe sont liés à la périphérie dudit support, de part et d'autre de l'axe de rotation de l'organe de coupe correspondant. Lors du travail, lesdits éléments de coupe décrivent par conséquent un cercle autour dudit axe de rotation et ils viennent couper par impact le produit sur pied. Pour sa part ledit support, en sus de lier lesdits éléments de coupe audit axe de rotation, a également pour fonction de transporter le produit ainsi coupé.

D'une manière connue de l'homme de l'art, lesdits organes de coupe sont suffisamment rapprochés les uns des autres de façon que les cercles décrits par les éléments de coupe de deux organes de coupe adjacents se chevauchent. De ce fait, les trajectoires des éléments de coupe de deux organes de coupe adjacents se croisent en deux points. Pour que ledit produit sur pied soit coupé sur toute la largeur dudit dispositif de coupe, un desdits points de croisement doit nécessairement être situé en avant dudit carter.

D'une manière également connue de l'homme de l'art, les organes de coupe d'une faucheuse n'adoptent pas tous le même sens de rotation. Ainsi, cette faucheuse connue comporte d'une part des organes de coupe adjacents ayant des sens de rotation identiques. De tels organes de coupe, situés généralement aux extrémités dudit carter, permettent avantageusement de rapprocher le produit coupé d'un plan vertical médian dudit dispositif de coupe. Cette faucheuse connue comporte d'autre part des organes de coupe adjacents ayant des sens de rotation opposés et convergents vers l'avant. De tels organes de coupe permettent par contre de transporter ledit produit coupé vers l'arrière dudit dispositif de coupe. Finalement, cette faucheuse connue peut également comporter des organes de coupe adjacents ayant des sens de rotation opposés et divergents vers l'avant.

Avec les faucheuses rotatives telles que décrites dans ce document antérieur, il est important d'obtenir une évacuation efficace du produit coupé vers l'arrière dudit dispositif de coupe. En effet avec une mauvaise évacuation, du produit coupé pourrait encombrer la zone de travail desdits éléments de coupe et ainsi dégrader la qualité de coupe de ladite faucheuse. Dans la pratique, il s'avère également que du produit coupé mal évacué peut être à l'origine de bourrages dudit dispositif de coupe, c'est-à-dire un blocage de la rotation desdits organes de coupe. Pour améliorer le transport du produit coupé au niveau desdits organes de coupe, les constructeurs de machines agricoles ont, jusqu'à ce jour, principalement travaillé sur la forme et/ou les dimensions desdits supports et desdits éléments de coupe.

Le document DE 199 27 966 décrit une faucheuse comportant un carter sous lequel sont disposés plusieurs organes de coupe rotatifs. Chacun de ces organes est pourvu d'au moins un élément de coupe qui décrit des cercles durant la rotation. L'organe de coupe situé en première position a un diamètre tel que les cercles décrits par ses éléments de coupe soient plus grands que ceux décrits par les éléments de coupe de l'organe situé en dernière position. Le résultat ainsi recherché est d'obtenir des largeurs de coupe effectives des deux organes de coupe d'extrémité qui soient sensiblement identiques, le surplus de diamètre du premier organe de coupe étant utilisé pour passer au-dessus d'une zone déjà travaillée. L'agencement connu dans ce document ne permet pas d'améliorer l'évacuation vers l'arrière du produit coupé et la qualité de la coupe.

Le document US 4 686 818 se rapporte à une faucheuse avec un carter sous lequel sont situés quatre organes de coupe réalisés de telle manière que les deux organes disposés aux extrémités ont des diamètres plus grands que les diamètres des deux organes intermédiaires. Cet agencement doit permettre de former un andain de largeur réduite grâce aux organes de coupe des extrémités qui déplacent le produit coupé sur une plus grande distance vers le milieu de la machine. Il ne permet cependant pas d'améliorer l'évacuation vers l'arrière du produit coupé et la qualité de la coupe.

La présente invention propose avantageusement une nouvelle approche pour améliorer le transport du produit coupé vers l'arrière dudit dispositif de coupe et ainsi obtenir une qualité de coupe remarquable.

En effet, la machine agricole de la présente invention est caractérisée par le fait que la distance séparant les axes de rotation de deux organes de coupe adjacents ayant des sens de rotation opposés et convergents vers l'avant est supérieure à au moins une distance séparant les axes de rotation de deux organes de coupe adjacents ayant des sens de rotation ne convergeant pas vers l'avant.

De ce fait, l'augmentation de la distance séparant les axes de rotation de deux organes de coupe adjacents ayant des sens de rotation opposés et convergents vers l'avant permet avantageusement d'augmenter la composante longitudinale de la tangente au point de croisement des cercles décrits par lesdits éléments de coupe correspondants. L'augmentation de ladite composante longitudinale engendre un meilleur transport du produit coupé vers l'arrière dudit dispositif de coupe. La qualité de coupe de ladite faucheuse est donc améliorée.

Afin de conserver une largeur de travail identique dudit dispositif de coupe, l'augmentation de ladite distance séparant les axes de rotation de deux organes de coupe adjacents ayant des sens de rotation opposés et convergents vers l'avant s'accompagne d'une diminution d'au moins une desdites distances séparant les axes de rotation de deux organes de coupe adjacents ayant des sens de rotation ne convergeant pas vers l'avant. Cette diminution de distance entre deux organes de coupe adjacents permet avantageusement d'augmenter la zone de recouvrement des cercles décrits par les éléments de coupe correspondants. Une zone de recouvrement accrue améliore encore plus la qualité de coupe de ladite faucheuse.

D'autres caractéristiques de l'invention, à considérer séparément ou dans toutes leurs combinaisons possibles, apparaîtront encore dans la description suivante d'un exemple de réalisation non limitatif de l'invention représenté sur les dessins annexés sur lesquels :
- la **figure 1** représente, vue de dessus, une machine agricole conforme à l'invention,
- la **figure 2** représente, vue de derrière suivant la flèche II définie sur la figure 1, la machine agricole de la figure 1,
- la **figure 3** représente, vue de dessus et à une autre échelle, les organes de coupe de la machine agricole de la figure 1.

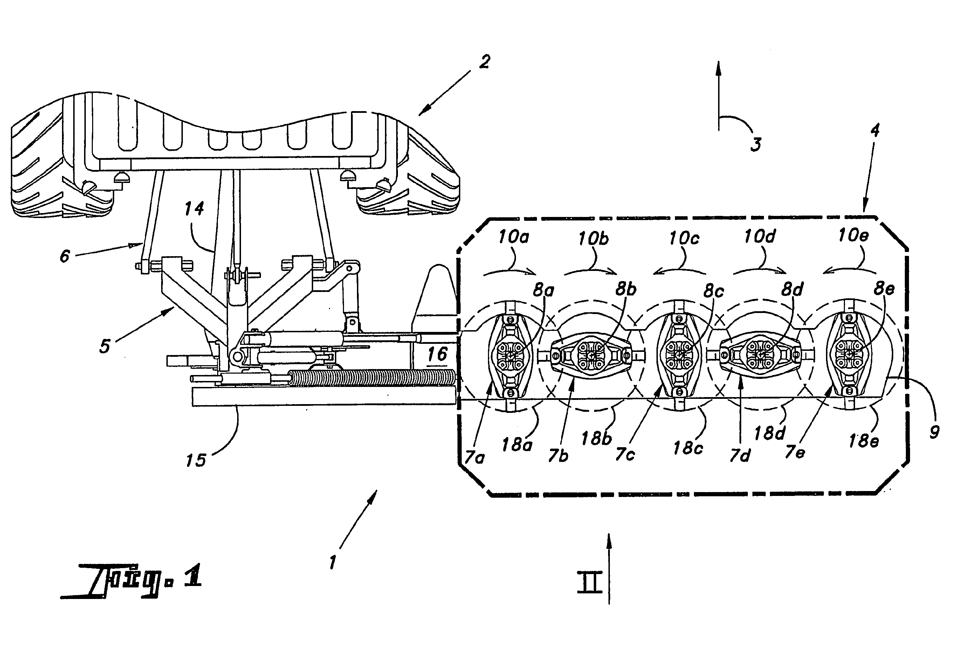

La figure 1 représente, en vue de dessus, une faucheuse agricole (1) conforme à la présente invention. Ladite faucheuse (1) est attelée à un véhicule moteur (2) qui la tire suivant une direction et un sens d'avance indiqué par la flèche (3). Dans la suite de la description, les notions suivantes "avant" et "arrière", "devant" et "derrière" sont définies par rapport au sens d'avance (3) et les notions "droite" et "gauche" sont définies en regardant ladite faucheuse (1) de l'arrière dans le sens d'avance (3).

D'une manière connue de l'homme de l'art, ladite faucheuse (1) comporte un dispositif de coupe (4) destiné à couper un produit sur pied tel que de l'herbe par exemple. Ladite faucheuse (1) comporte également un châssis (5) permettant de lier ledit dispositif de coupe (4) audit véhicule moteur (2).

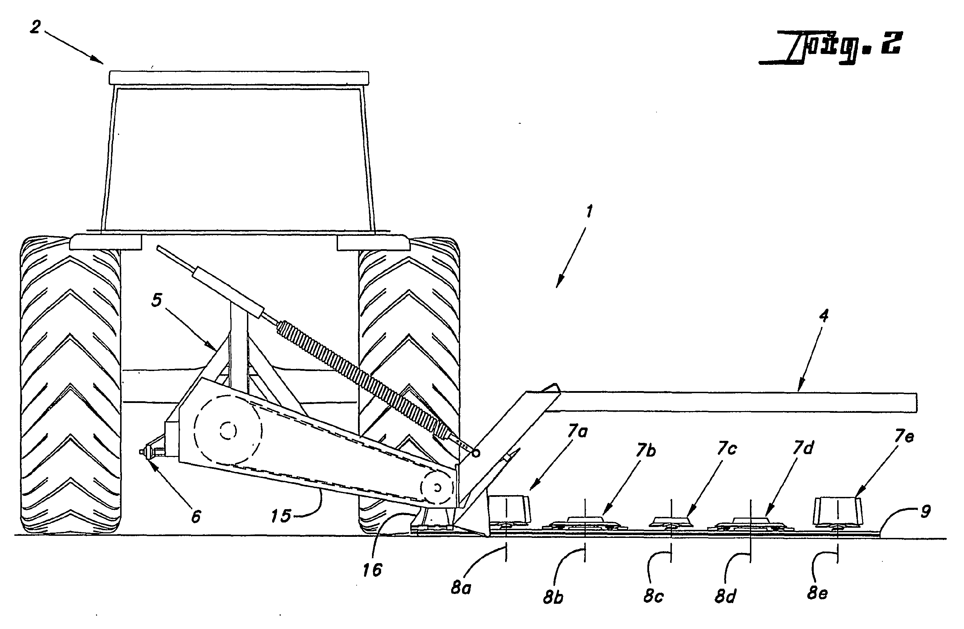

Dans l'exemple de réalisation représenté sur les figures 1 et 2, ladite faucheuse agricole (1) est du type portée arrière. Lors du travail, ledit châssis (5) est donc attelé à un relevage trois points (6) dudit véhicule moteur (2) et ledit dispositif de coupe (4) est situé quelque peu en arrière et sur le coté dudit véhicule moteur (2). Un tel châssis (5) d'une faucheuse (1) est connu en soi, il ne sera donc pas décrit d'avantage. Toutefois pour de plus amples détails, l'homme du métier peut se référer au document EP 0 723 739 où un tel châssis (5) est parfaitement bien décrit.

Le dispositif de coupe (4) conforme à la présente invention comporte un carter (9) et au moins trois organes de coupe (7a, 7b, 7c, 7d, 7e). Lors du travail, représenté sur les figures 1 et 2, ledit carter (9) repose au moins partiellement sur le sol, transversalement à ladite direction d'avance (3). Lesdits organes de coupe (7a, 7b, 7c, 7d, 7e), quant à eux, sont entraînés suivant un sens de rotation (10a, 10b, 10c, 10d, 10e) autour d'un axe respectif (8a, 8b, 8c, 8d, 8e) dirigé vers le haut. A cet effet, chaque organe de coupe (7a, 7b, 7c, 7d, 7e) est lié de manière pivotante audit carter (9) au moyen d'une articulation respective. De plus, chaque organe de coupe (7a, 7b, 7c, 7d, 7e) est en prise avec un élément de transmission. En position de travail, lesdits organes de coupe (7a, 7b, 7c, 7d, 7e) sont plus précisément disposés au-dessus dudit carter (9). D'une manière préférentielle, lesdits organes de coupe (7a, 7b, 7c, 7d, 7e) sont alignés sur une droite et disposés dans un même plan d'extension.

Dans l'exemple de réalisation représenté sur les figures 1 et 2, ledit carter (9) est un carter monobloc et lesdits éléments de transmission se composent notamment d'une cascade de pignons disposée à l'intérieur dudit carter (9). Chaque organe de coupe (7a, 7b, 7c, 7d, 7e) est ainsi en prise avec au moins un desdits pignons présents dans ledit carter (9). D'une manière connue de l'homme de l'art, ladite cascade de pignons est entraînée à partir d'une prise de force dudit véhicule moteur (2) au moyen notamment d'un arbre de transmission télescopique à joints universels (14), d'un système poulies-courroie (15) et d'un carter de renvoi (16).

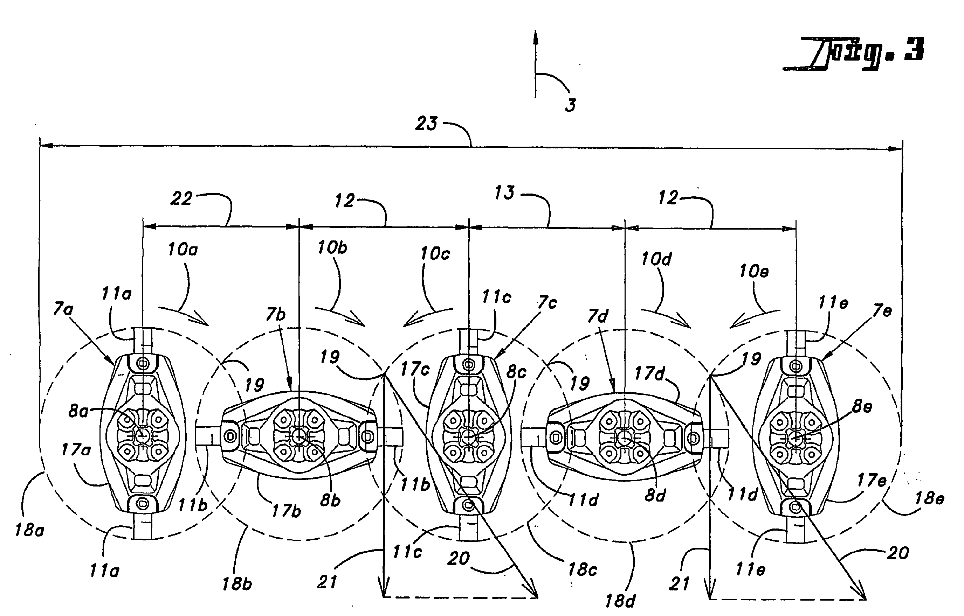

A la lumière plus précisément de la figure 3, chaque organe de coupe (7a, 7b, 7c, 7d, 7e) comporte avantageusement un support (17a, 17b, 17c, 17d, 17e) et deux éléments de coupe (11a, 11b, 11c, 11d, 11e). Ledit support (17a, 17b, 17c, 17d, 17e) possède une forme ovale centrée sur ledit axe de rotation (8a, 8b, 8c, 8d, 8e). Lesdits éléments de coupe (11a, 11b, 11c, 11d, 11e) sont liés à la périphérie dudit support (17a, 17b, 17c, 17d, 17e), de part et d'autre dudit axe de rotation (8a, 8b, 8c, 8d, 8e). Plus précisément, lesdits éléments de coupe (11 a, 11b, 11 c, 11 d, 11e) sont avantageusement disposés aux extrémités d'un grand diamètre de ladite forme ovale.

Lors du travail, lesdits organes de coupe (7a, 7b, 7c, 7d, 7e) sont entraînés en rotation. Lesdits éléments de coupe (11a, 11b, 11c, 11d, 11e) décrivent donc des cercles (18a, 18b, 18c, 18d, 18e) autour dudit axe de rotation (8a, 8b, 8c, 8d, 8e) de l'organe de coupe respectif (7a, 7b, 7c, 7d, 7e). Par soucis de clarté, lesdits cercles (18a, 18b, 18c, 18d, 18e) sont représentés en pointillé sur les figures 1 et 3. La grande vitesse de déplacement atteinte ainsi par lesdits éléments de coupe (11a, 11b, 11c, 11d, 11e) permet à ces derniers de couper par impact ledit produit sur pied. D'une manière préférentielle, lesdits cercles (18a, 18b, 18c, 18d, 18e) décrits par les différents éléments de coupe (11a, 11b, 11c, 11d, 11e) ont des diamètres identiques. Pour sa part chaque support (17a, 17b, 17c, 17d, 17e), en sus de lier lesdits éléments de coupe (11a, 11b, 11c, 11d, 11e) audit axe de rotation respectif (8a, 8b, 8c, 8d, 8e), a également pour fonction de transporter le produit coupé.

A la lumière de la figure 3, lesdits organes de coupe (7a, 7b, 7c, 7d, 7e) sont suffisamment rapprochés les uns des autres pour que lesdits cercles (18a, 18b, 18c, 18d, 18e) décrits par lesdits éléments de coupe respectifs (11a, 11b, 11c, 11d, 11e) se chevauchent. Les trajectoires des éléments de coupe (11a, 11b, 11c, 11d, 11e) de deux organes de coupe adjacents (7a, 7b, 7c, 7d, 7e) se croisent donc en des points de croisement (19). D'une manière préférentielle, l'un desdits points de croisement (19) est avantageusement situé en avant dudit carter (9). Ainsi le recouvrement des zones de coupe garantie avantageusement une coupe dudit produit sur pied sur toute la largeur de travail (23) dudit dispositif de coupe (4).

D'une manière particulièrement avantageuse, lesdits organes de coupe (7a, 7b, 7c, 7d, 7e) sont décalés angulairement les uns par rapport aux autres. Dans l'exemple de réalisation représenté sur les figures, ce décalage angulaire est d'environ 90 degrés. Lesdits éléments de transmission disposés à l'intérieur dudit carter (9) permettent de synchroniser la rotation desdits organes de coupe (7a, 7b, 7c, 7d, 7e). Lors du travail, ledit décalage angulaire est donc conservé. Ainsi malgré le recouvrement des zones d'évolution desdits éléments de coupe (11a, 11b, 11c, 11d, 11e), lesdits organes de coupe (7a, 7b, 7c, 7d, 7e) ne peuvent pas se percuter.

Dans l'exemple de réalisation représenté sur les figures, ledit dispositif de coupe (4) comporte plus précisément cinq organes de coupe (7a, 7b, 7c, 7d, 7e). Par soucis de clarté dans la suite de la description et sur les figures, les objets s'appliquant à un même organe de coupe seront référencés avec un même indice. Ainsi ledit organe de coupe (7a) est entraîné en rotation autour d'un axe (8a) suivant un sens de rotation (10a).

A la lumière des figures 1 et 3, l'organe de coupe (7a) situé le plus à gauche dudit carter (9) tourne, en vue de dessus, suivant le sens des aiguilles d'une montre (10a). Pour sa part, l'organe de coupe (7e) situé le plus à droite dudit carter (9) tourne suivant le sens contraire des aiguilles d'une montre (10e). Ainsi, lesdits organes de coupe (7a, 7e) situés aux extrémités dudit carter (9) permettent avantageusement de rapprocher ledit produit coupé d'un plan vertical médian dudit dispositif de coupe (4).

Dans l'exemple de réalisation représenté sur les figures, lesdits organes de coupe (7b, 7d) tournent également suivant le sens des aiguilles d'une montre (10b, 10d). Tandis que ledit organe de coupe (7c) tourne suivant le sens contraire des aiguilles d'une montre (10c). De ce fait, ledit dispositif de coupe (4) comporte :
- des organes de coupe adjacents (7a, 7b) tournant suivant le même sens de rotation (10a, 10b),
- des organes de coupe adjacents (7b, 7c ; 7d, 7e) ayant des sens de rotation opposés (10b, 10c ; ;10d, 10e) et convergents vers l'avant, et
- des organes de coupe adjacents (7c, 7d) ayant des sens de rotation opposés (10c, 10d) et divergents vers l'avant.

D'une manière connue de l'homme de l'art, lesdits organes de coupe adjacents (7a, 7b) tournant suivant le même sens de rotation (10a, 10b) permettent de transporter ledit produit coupé transversalement à ladite direction d'avance (3). Alors que lesdits organes de coupes adjacents (7b, 7c ; 7d, 7e) ayant des sens de rotation opposés (10b, 10e ; 10d, 10e) et convergents vers l'avant permettent de transporter ledit produit coupé vers l'arrière dudit dispositif de coupe (4).

Selon une caractéristique importante de la présente invention, la distance (12) séparant les axes de rotation (8b, 8c ; 8d, 8e) de deux organes de coupe adjacents (7b, 7c ; 7d, 7e) ayant des sens de rotation opposés (10b, 10c ; 10d, 10e) et convergents vers l'avant est supérieure à au moins une distance (13, 22) séparant les axes de rotation (8a, 8b ; 8c, 8d) de deux organes de coupe adjacents (7a, 7b ; 7c, 7d) ayant des sens de rotation (10a, 10b ; 10c, 10d) ne convergeant pas vers l'avant.

Comme visible plus particulièrement sur la figure 3, l'augmentation de la distance (12) séparant les axes de rotation (8b, 8c ; 8d, 8e) de deux organes de coupe adjacents (7b, 7c ; 7d, 7e) ayant des sens de rotation opposés (10b, 10c ; 10d, 10e) et convergents vers l'avant permet avantageusement d'augmenter la composante longitudinale (21) de la tangente (20) au point de croisement (19) desdits cercles (18b, 18c ; 18d, 18e). L'augmentation de ladite composante longitudinale (21) engendre un meilleur transport dudit produit coupé vers l'arrière dudit dispositif de coupe (4).

Si pour des raisons d'encombrement la largeur de travail (23) dudit dispositif de coupe (4) doit rester identique, l'augmentation de ladite distance (12) séparant les axes de rotation (8b, 8c ; 8d, 8e) de deux organes de coupe adjacents (7b, 7c ; 7d, 7e) ayant des sens de rotation opposés (10b, 10c ; 10d, 10e) et convergents vers l'avant s'accompagne d'une diminution d'au moins une desdites distance (13, 22) séparant les axes de rotation (8a, 8b ; 8c, 8d) de deux organes de coupe adjacents (7a, 7b ; 7c, 7d) ayant des sens de rotation (10a, 10b;10c, 10d) ne convergeant pas vers l'avant. Cette diminution de distance (13, 22) entre deux organes de coupe adjacents (7a, 7b ; 7c, 7d) permet avantageusement d'augmenter la zone de recouvrement desdits cercles (18a, 18b ; 18c, 18d) décrits par lesdits éléments de coupe correspondants (11a, 11b ; 11c, 11d).

Selon un autre exemple de réalisation conforme à la présente invention et non représenté sur les figures, ladite distance (12) séparant les axes de rotation (8b, 8c ; 8d, 8e) de deux organes de coupe adjacents (7b, 7c ; 7d, 7e) ayant des sens de rotation (10b, 10c ; 10d, 10e) opposés et convergents vers l'avant est :
- supérieure à ladite distance (13) séparant les axes de rotation (8c, 8d) de deux organes de coupe adjacents (7c, 7d) ayant des sens de rotation opposés (10e, 10d) et divergents vers l'avant, et
- égale à ladite distance (22) séparant les axes de rotation (8a, 8b) de deux organes de coupe adjacents (7a, 7b) ayant des sens de rotation identiques (10a, 10b).

De même selon un autre exemple de réalisation conforme à la présente invention non représenté, ladite distance (12) séparant les axes de rotation (8b, 8c ; 8d, 8e) de deux organes de coupe adjacents (7b, 7c ; 7d, 7e) ayant des sens de rotation (10b, 10e ; 10d, 10e) opposés et convergents vers l'avant est :
- supérieure à ladite distance (22) séparant les axes de rotation (8a, 8b) de deux organes de coupe adjacents (7a, 7b) ayant des sens de rotation identiques (10a, 10b), et
- égale à ladite distance (13) séparant les axes de rotation (8c, 8d) de deux organes de coupe adjacents (7c, 7d) ayant des sens de rotation opposés (10e, 10d) et divergents vers l'avant.

D'une manière préférentielle, la valeur de ladite distance (12) séparant les axes de rotation (8b, 8c ; 8d, 8e) de deux organes de coupe adjacents (7b, 7c ; 7d, 7e) ayant des sens de rotation (10b, 10c ;10d, 10e) opposés et convergents vers l'avant est identique pour tous lesdits organes de coupe adjacents (7b, 7c ; 7d, 7e) ayant des sens de rotation (10b, 10c; 10d, 10e) opposés et convergents vers l'avant.

D'une manière également préférentielle, la valeur de ladite distance (13) séparant les axes de rotation (8c, 8d) de deux organes de coupe adjacents (7c, 7d) ayant des sens de rotation opposés (10e, 10d) et divergents vers l'avant est identique pour tous lesdits organes de coupe adjacents (7c, 7d) ayant des sens de rotation opposés (10e, 10d) et divergents vers l'avant

De plus, la valeur de ladite distance (22) séparant les axes de rotation (8a, 8b) de deux organes de coupe adjacents (7a, 7b) ayant des sens de rotation identiques (10a, 10b) est avantageusement la même pour tous lesdits organes de coupe adjacents (7a, 7b) ayant des sens de rotation identiques (10a, 10b).

De ce fait, lesdits organes de coupe (7a, 7b, 7c, 7d, 7e) sont disposés au-dessus dudit carter (9) suivant au plus trois intervalles différents. Ainsi la réalisation et la disposition desdits éléments de transmission à l'intérieur dudit carter (9) sont simplifiées.

La faucheuse (1) et le dispositif de coupe (4) qui viennent d'être décrits ne sont qu'un exemple qui ne saurait en aucun cas limiter le domaine de protection défini par les revendications suivantes.

Ainsi le dispositif de coupe (4) conforme à la présente invention peut également équiper une faucheuse de type traînée ou une faucheuse automotrice.

Selon un autre exemple de réalisation non représenté, ledit carter (9) est un carter modulaire. C'est-à-dire que ledit carter (9) est constitué d'un ensemble de modules reliés entre-eux, chaque module supportant un organe de coupe (7a, 7b, 7c, 7d, 7e). De plus, lesdits éléments de transmission présents dans ledit carter (9) peuvent également être réalisés au moyen d'arbres de transmission, de pignons à renvoi d'angle, de chaînes ou tous autres moyens connus.

Ledit support (17a, 17b, 17c, 17d, 17e) desdits organes de coupe (7a, 7b, 7c, 7d, 7e) peut avoir une forme différente, par exemple circulaire ou triangulaire, et supporté un nombre différent d'élément de coupe (11a, 11b, 11c, 11d, 11e).

Selon un autre exemple de réalisation non représenté, ledit dispositif de coupe (4) comporte un nombre d'organe de coupe (7a, 7b, 7c, 7d, 7e) différent tout en étant supérieur à deux. De plus, la répartition des sens de rotation (10a, 10b, 10c, 10d, 10e) entre les différents organes de coupe (7a, 7b, 7c, 7d, 7e) peut également être différente tout en ayant au moins deux organes de coupe adjacents (7b, 7c ; 7d, 7e) ayant des sens de rotation (10b, 10e ;10d, 10e) opposés et convergents vers l'avant.

## Revendications

1. Machine agricole munie d'un dispositif de coupe (4), ledit dispositif de coupe (4) comportant :
- un carter (9),
- au moins trois organes de coupe (7a, 7b, 7c, 7d, 7e) disposés au-dessus dudit carter (9) et liés audit carter (9) de manière pivotante autour d'un axe respectif (8a, 8b, 8c, 8d, 8e) dirigé vers le haut, ces organes de coupe (7a, 7b, 7c, 7d, 7e) comportant des éléments de coupe (11a, 11b, 11c, 11d, 11e) décrivant, lors du travail, des cercles (18a, 18b, 18c, 18d, 18e) autour de l'axe de rotation (8a, 8b, 8c, 8d, 8e) de l'organe de coupe respectif (7a, 7b, 7c, 7d, 7e), lesdits cercles (18a, 18b, 18c, 18d, 18e) ayant tous les mêmes diamètres,
- des éléments de transmission entraînant en rotation lesdits organes de coupe (7a, 7b, 7c, 7d, 7e) autour desdits axes respectifs (8a, 8b, 8c, 8d, 8e), et
- parmi lesdits organes de coupe (7a, 7b, 7c, 7d, 7e), au moins deux organes de coupe adjacents (7b, 7c ; 7d, 7e) ayant des sens de rotation (10b, 10c ; 10d, 10e) opposés et convergents vers l'avant,
***caractérisée par le fait que*** la distance (12) séparant les axes de rotation (8b, 8c ; 8d, 8e) de deux organes de coupe adjacents (7b, 7c ; 7d, 7e) ayant des sens de rotation (10b, 10c ; 10d, 10e) opposés et convergents vers l'avant est supérieure à au moins une distance (13, 22) séparant les axes de rotation (8a, 8b ; 8c, 8d) de deux organes de coupe adjacents (7a, 7b ; 7c, 7d) ayant des sens de rotation (10a, 10b ; 10c, 10d) ne convergeant pas vers l'avant.

2. Machine agricole selon la revendication 1, ***caractérisée par le fait que*** ladite distance (12) séparant les axes de rotation (8b, 8c ; 8d, 8e) de deux organes de coupe adjacents (7b, 7c ; 7d, 7e) ayant des sens de rotation (10b, 10e ;10d, 10e) opposés et convergents vers l'avant est :
- supérieure à ladite distance (13) séparant les axes de rotation (8c, 8d) de deux organes de coupe adjacents (7c, 7d) ayant des sens de rotation opposés (10e, 10d) et divergents vers l'avant, et
- égale à ladite distance (22) séparant les axes de rotation (8a, 8b) de deux organes de coupe adjacents (7a, 7b) ayant des sens de rotation identiques (10a, 10b).

3. Machine agricole selon la revendication 1, ***caractérisée par le fait que*** ladite distance (12) séparant les axes de rotation (8b, 8c ; 8d, 8e) de deux organes de coupe adjacents (7b, 7c ; 7d, 7e) ayant des sens de rotation (10b, 10c ; 10d, 10e) opposés et convergents vers l'avant est :
- supérieure à ladite distance (22) séparant les axes de rotation (8a, 8b) de deux organes de coupe adjacents (7a, 7b) ayant des sens de rotation identiques (10a, 10b), et
- égale à ladite distance (13) séparant les axes de rotation (8c, 8d) de deux organes de coupe adjacents (7c, 7d) ayant des sens de rotation opposés (10e, 10d) et divergents vers l'avant.

4. Machine agricole selon la revendication 1, ***caractérisée par le fait que*** ladite distance (13) séparant les axes de rotation (8c, 8d) de deux organes de coupe adjacents (7c, 7d) ayant des sens de rotation opposés (10c, 10d) et divergents vers l'avant est égale à ladite distance (22) séparant les axes de rotation (8a, 8b) de deux organes de coupe adjacents (7a, 7b) ayant des sens de rotation identiques (10a, 10b).

5. Machine agricole selon l'une quelconque des revendications 1 à 4, ***caractérisée par le fait que*** la valeur de ladite distance (12) séparant les axes de rotation (8b, 8c ; 8d, 8e) de deux organes de coupe adjacents (7b, 7c ; 7d, 7e) ayant des sens de rotation (10b, 10c ; 10d, 10e) opposés et convergents vers l'avant est identique pour tous lesdits organes de coupe adjacents (7b, 7c ; 7d, 7e) ayant des sens de rotation (10b, 10c; 10d, 10e) opposés et convergents vers l'avant.

6. Machine agricole selon l'une quelconque des revendications 1 à 5, ***caractérisée par le fait que*** la valeur de ladite distance (13) séparant les axes de rotation (8c, 8d) de deux organes de coupe adjacents (7c, 7d) ayant des sens de rotation (10c, 10d) opposés et divergents vers l'avant est identique pour tous lesdits organes de coupe adjacents (7c, 7d) ayant des sens de rotation (10e, 10d) opposés et divergents vers l'avant.

7. Machine agricole selon l'une quelconque des revendications 1 à 6, ***caractérisée par le fait que*** la valeur de ladite distance (22) séparant les axes de rotation (8a, 8b) de deux organes de coupe adjacents (7a, 7b) ayant des sens de rotation identiques (10a, 10b) est la même pour tous lesdits organes de coupe adjacents (7a, 7b) ayant des sens de rotation identiques (10a, 10b).

8. Machine agricole selon l'une quelconque des revendications 1 à 7, ***caractérisée par le fait que*** lesdits organes de coupe (7a, 7b, 7c, 7d, 7e) sont alignés suivant une droite.

9. Machine agricole selon l'une quelconque des revendications 1 à 8, ***caractérisée par le fait que*** lesdits organes de coupe (7a, 7b, 7c, 7d, 7e) sont disposés dans un même plan d'extension.

10. Machine agricole selon l'une quelconque des revendications 1 à 9, ***caractérisée par le fait que*** la trajectoire desdits éléments de coupe (11a, 11b, 11c, 11d, 11e) de deux organes de coupe adjacents (7a, 7b, 7c, 7d, 7e) se croisent en des points de croisement (19).

11. Machine agricole selon l'une quelconque des revendications 1 à 10, ***caractérisée par le fait que*** lesdits éléments de transmission sont disposés à l'intérieur dudit carter (9).

12. Machine agricole selon l'une quelconque des revendications 1 à 11, ***caractérisée par le fait que*** ladite machine agricole est une faucheuse.

13. Machine agricole selon l'une quelconque des revendications 1 à 11, ***caractérisée par le fait que*** ladite machine agricole est une faucheuse-conditionneuse.

## Claims

1. Agricultural machine equipped with a cutting device (4), the said cutting device (4) comprising:
- a casing (9),
- at least three cutting members (7a, 7b, 7c, 7d, 7e) arranged above the said casing (9) and connected to the said casing (9) such that they can rotate about an upwardly-directed respective axis (8a, 8b, 8c, 8d, 8e), these cutting members (7a, 7b, 7c, 7d, 7e) comprising cutting elements (11a, 11b, 11c, 11d, 11e) that describe, during work, circles (18a, 18b, 18c, 18d, 18e) about the axis of rotation (8a, 8b, 8c, 8d, 8e) of the said respective cutting member (7a, 7b, 7c, 7d, 7e), the said circles (18a, 18b, 18c, 18d, 18e) all being of the same diameter,
- transmission elements driving the said cutting members (7a, 7b, 7c, 7d, 7e) in rotation about the said respective axes (8a, 8b, 8c, 8d, 8e), and
- of the said cutting members (7a, 7b, 7c, 7d, 7e), at least two adjacent cutting members (7b, 7c; 7d, 7e) having directions of rotation (lOb, 10c; 10d, 10e) that are opposed and converge toward the front,
***characterized in* that** the distance (12) separating the axes of rotation (8b, 8c; 8d, 8e) of two adjacent cutting members (7b, 7c; 7d, 7e) having directions of rotation (10b, 10c; 10d, 10e) that are opposed and converge toward the front, is greater than at least a distance (13, 22) separating the axes of rotation (8a, 8b; 8c, 8d) of two adjacent cutting members (7a, 7b; 7c, 7d) that have directions of rotation (10a, 10b; 10c, 10d) that do not converge toward the front.

2. Agricultural machine as claimed in claim 1, ***characterized in* that** the said distance (12) separating the axes of rotation (8b, 8c; 8d, 8e) of two adjacent cutting members (7b, 7c; 7d, 7e) that have directions of rotation (10b, 10c; 10d, 10e) that are opposed and converge toward the front is:
- greater than the said distance (13) separating the axes of rotation (8c, 8d) of two adjacent cutting members (7c, 7d) that have directions of rotation (10c, 10d) that are opposed and diverge toward the front, and
- equal to the said distance (22) separating the axes of rotation (8a, 8b) of two adjacent cutting members (7a, 7b) that have identical directions of rotation (10a, 10b).

3. Agricultural machine as claimed in claim 1, ***characterized in* that** the said distance (12) separating the axes of rotation (8b, 8c; 8d, 8e) of two adjacent cutting members (7b, 7c; 7d, 7e) that have directions of rotation (10b, 10c; 10d, 10e) that are opposed and converge toward the front, is:
- greater than the said distance (22) separating the axes of rotation (8a, 8b) of two adjacent cutting members (7a, 7b) that have identical directions of rotation (10a, 10b), and
- equal to the said distance (13) separating the axes of rotation (8c, 8d) of two adjacent cutting members (7c, 7d) that have directions of rotation (10c, 10d) that are opposed and diverge toward the front.

4. Agricultural machine as claimed in claim 1, ***characterized in* that** the said distance (13) separating the axes of rotation (8c, 8d) of two adjacent cutting members (7c, 7d) having directions of rotation (10c, 10d) that are opposed and diverge toward the front is equal to the said distance (22) separating the axes of rotation (8a, 8b) of two adjacent cutting members (7a, 7b) having identical directions of rotation (10a, 10b).

5. Agricultural machine as claimed in any one of claims 1 to 4, ***characterized in* that** the value of the said distance (12) separating the axes of rotation (8b, 8c; 8d, 8e) of two adjacent cutting members (7b, 7c; 7d, 7e) that have directions of rotation (10b, 10c; 10d, 10e) that are opposed and converge toward the front is identical for all the said adjacent cutting members (7b, 7c; 7d, 7e) that have directions of rotation (10b, 10c; 10d, 10e) that are opposed and converge toward the front.

6. Agricultural machine as claimed in any one of claims 1 to 5, ***characterized in* that** the value of the said distance (13) separating the axes of rotation (8c, 8d) of two adjacent cutting members (7c, 7d) that have directions of rotation (10c, 10d) that are opposed and diverge toward the front is identical for all the said adjacent cutting members (7c, 7d) that have directions of rotation (10c, 10d) that are opposed and diverge toward to the front.

7. Agricultural machine as claimed in any one of claims 1 to 6, ***characterized* in that** the value of the said distance (22) separating the axes of rotation (8a, 8b) of two adjacent cutting members (7a, 7b) that have identical directions of rotation (10a, 10b) is the same for all the said adjacent cutting members (7a, 7b) that have identical directions of rotation (10a, 10b).

8. Agricultural machine as claimed in any one of claims 1 to 7, ***characterized in* that** the said cutting members (7a, 7b, 7c, 7d, 7e) are aligned in one straight line.

9. Agricultural machine as claimed in any one of claims 1 to 8, ***characterized in* that** the said cutting members (7a, 7b, 7c, 7d, 7e) are arranged in one single plane of extension.

10. Agricultural machine as claimed in any one of claims 1 to 9, ***characterized in* that** the path of the said cutting elements (11a, 11b, 11c, 11d, 11e) of two adjacent cutting members (7a, 7b, 7c, 7d, 7e) cross at points of intersection (19).

11. Agricultural machine as claimed in any one of claims 1 to 10, ***characterized in* that** the said transmission elements are arranged inside the said casing (9).

12. Agricultural machine as claimed in any one of claims 1 to 11, ***characterized in* that** the said agricultural machine is a mower.

13. Agricultural machine as claimed in any one of claims 1 to 11, ***characterized in* that** the said agricultural machine is a mower-conditioner.

## Patentansprüche

1. Landwirtschaftliche Maschine mit einer Schneidvorrichtung (4), wobei die Schneidvorrichtung (4):
- ein Gehäuse (9),
- mindestens drei Schneideinrichtungen (7a, 7b, 7c, 7d, 7e), die über dem Gehäuse (9) angeordnet und mit dem Gehäuse (9) drehbar um eine jeweilige nach oben gerichtete Achse (8a, 8b, 8c, 8d, 8e) verbunden sind, wobei diese Schneideinrichtungen (7a, 7b, 7c, 7d, 7e) Schneidelemente (11a, 11b, 11c, 11d, 11e) umfassen, die bei der Arbeit Kreise (18a, 18b, 18c, 18d, 18e) um die Drehachse (8a, 8b, 8c, 8d, 8e) der jeweiligen Schneideinrichtung (7a, 7b, 7c, 7d, 7e) beschreiben, wobei die Kreise (18a, 18b, 18c, 18d, 18e) alle dieselben Durchmesser haben,
- Übertragungselemente, die die Schneideinrichtungen (7a, 7b, 7c, 7d, 7e) um die jeweiligen Achsen (8a, 8b, 8c, 8d, 8e) in Drehung antreiben, und
- unter den Schneideinrichtungen (7a, 7b, 7c, 7d, 7e) mindestens zwei aneinander grenzende Schneideinrichtungen (7b, 7c; 7d, 7e) mit entgegen gesetzten Drehrichtungen (10b, 10c; 10d, 10e), die nach vorne hin zusammenlaufen,
umfasst, ***dadurch gekennzeichnet,* dass** der Abstand (12) zwischen den Drehachsen (8b, 8c; 8d, 8e) zweier aneinander grenzender Schneideinrichtungen (7b, 7c; 7d, 7e) mit entgegen gesetzten Drehrichtungen (10b, 10c; 10d, 10e), die nach vorne hin zusammenlaufen, größer als mindestens ein Abstand (13, 22) zwischen den Drehachsen (8a, 8b; 8c, 8d) zweier aneinander grenzender Schneideinrichtungen (7a, 7b; 7c, 7d) mit Drehrichtungen (10a, 10b; 10c, 10d), die nicht nach vorne hin zusammenlaufen, ist.

2. Landwirtschaftliche Maschine nach Anspruch 1, ***dadurch gekennzeichnet,* dass** der Abstand (12) zwischen den Drehachsen (8b, 8c; 8d, 8e) zweier aneinander grenzender Schneideinrichtungen (7b, 7c; 7d, 7e) mit entgegen gesetzten Drehrichtungen (10b, 10c; 10d, 10e), die nach vorne hin zusammenlaufen:
- größer als der Abstand (13) zwischen den Drehachsen (8c, 8d) zweier aneinander grenzender Schneideinrichtungen (7c, 7d) mit entgegen gesetzten Drehrichtungen (10c, 10d), die nach vorne hin auseinander laufen, ist, und
- gleich dem Abstand (22) zwischen den Drehachsen (8a, 8b) zweier aneinander grenzender Schneideinrichtungen (7a, 7b), die identische Drehrichtungen (10a, 10b) haben, ist.

3. Landwirtschaftliche Maschine nach Anspruch 1, ***dadurch gekennzeichnet,* dass** der Abstand (12) zwischen den Drehachsen (8b, 8c; 8d, 8e) zweier aneinander grenzender Schneideinrichtungen (7b, 7b; 7d, 7e) mit entgegen gesetzten Drehrichtungen (10b, 10c; 10d, 10e), die nach vorne hin zusammenlaufen:
- größer als der Abstand (22) zwischen den Drehachsen (8a, 8b) zweier aneinander grenzender Schneideinrichtungen (7a, 7b) mit identischen Drehrichtungen (10a, 10b) ist, und
- gleich dem Abstand (13) zwischen den Drehachsen (8c, 8d) zweier aneinander grenzender Schneideinrichtungen (7c, 7d) mit entgegen gesetzten Drehrichtungen (10c, 10d), die nach vorne hin auseinander laufen, ist.

4. Landwirtschaftliche Maschine nach Anspruch 1, ***dadurch gekennzeichnet,* dass** der Abstand (13) zwischen den Drehachsen (8c, 8d) zweier aneinander grenzender Schneideinrichtungen (7c, 7d) mit entgegen gesetzten Drehrichtungen (10c, 10d), die nach vorne hin auseinander laufen, gleich dem Abstand (22) zwischen den Drehachsen (8a, 8b) zweier aneinander grenzender Schneideinrichtungen (7a, 7b) mit identischen Drehrichtungen (10a, 10b) ist.

5. Landwirtschaftliche Maschine nach irgend einem der Ansprüche 1 bis 4, ***dadurch gekennzeichnet,* dass** der Wert des Abstandes (12) zwischen den Drehachsen (8b, 8c; 8d, 8e) zweier aneinander grenzender Schneideinrichtungen (7b, 7c; 7d, 7e) mit entgegen gesetzten Drehrichtungen (10b, 10c; 10d, 10e), die nach vorne hin zusammenlaufen, für alle aneinander grenzenden Schneideinrichtungen (7b, 7c; 7d, 7e) mit entgegen gesetzten Drehrichtungen (10b, 10c; 10d, 10e die nach vorne hin zusammenlaufen, identisch ist.

6. Landwirtschaftliche Maschine nach irgend einem der Ansprüche 1 bis 5, ***dadurch gekennzeichnet,* dass** der Wert des Abstandes (13) zwischen den Drehachsen (8c, 8d) zweier aneinander grenzender Schneideinrichtungen (7c, 7d) mit entgegen gesetzten Drehrichtungen (10c, 10d), die nach vorne hin auseinander laufen, für alle aneinander grenzenden Schneideinrichtungen (7c, 7d) mit entgegen gesetzten Drehrichtungen (10c, 10d), die nach vorne hin auseinander laufen, identisch ist.

7. Landwirtschaftliche Maschine nach irgend einem der Ansprüche 1 bis 6, ***dadurch gekennzeichnet,* dass** der Wert des Abstandes (22) zwischen den Drehachsen (8a, 8b) zweier aneinander grenzender Schneideinrichtungen (7a, 7b) mit identischen Drehrichtungen (10a, 10b) derselbe für alle aneinander grenzenden Schneideinrichtungen (7a, 7b) mit identischen Drehrichtungen (10a, 10b) ist.

8. Landwirtschaftliche Maschine nach irgend einem der Ansprüche 1 bis 7, ***dadurch gekennzeichnet,* dass** die Schneideinrichtungen (7a, 7b, 7c, 7d, 7e) entlang einer Geraden ausgerichtet sind.

9. Landwirtschaftliche Maschine nach irgend einem der Ansprüche 1 bis 8, ***dadurch gekennzeichnet,* dass** die Schneideinrichtungen (7a, 7b, 7c, 7d, 7e) in einer selben Ausdehnungsebene angeordnet sind.

10. Landwirtschaftliche Maschine nach irgend einem der Ansprüche 1 bis 9, ***dadurch gekennzeichnet,* dass** sich die Bahnen der Schneidelemente (11a, 11b, 11c, 11d, 11e) zweier aneinander grenzender Schneideinrichtungen (7a, 7b, 7c, 7d, 7e) in Kreuzungspunkten (19) kreuzen.

11. Landwirtschaftliche Maschine nach irgend einem der Ansprüche 1 bis 10, ***dadurch gekennzeichnet,* dass** die Übertragungselemente im Inneren des Gehäuses (9) angeordnet sind.

12. Landwirtschaftliche Maschine nach irgend einem der Ansprüche 1 bis 11, ***dadurch gekennzeichnet,* dass** die landwirtschaftliche Maschine eine Mähmaschine ist.

13. Landwirtschaftliche Maschine nach irgend einem der Ansprüche 1 bis 11, ***dadurch gekennzeichnet,* dass** die landwirtschaftliche Maschine eine Mäh- und Konditioniermaschine ist.
